# EUROPEAN PATENT APPLICATION

(11) **EP 1 463 237 A1**
(43) Date of publication of application: **29.09.2004**
(21) Application number: 04006556.7
(22) Date of filing: 18.03.2004
(51) Int. Cl.: H04L 12/24, H04L 29/08

(54) **Method and apparatus for displaying only a certain set of devices on the screen of a management device**

(30) Priority: 28.03.2003 JP 2003091706
(71) Applicant: Kabushiki Kaisha Toyota Jidoshokki, Kariya-shi, Aichi-ken 448-8671 (JP)
(72) Inventor: Iwashita, Tsunenori, K.K. Toyota Jidoshokki, Kariya-shi, Aichi-ken 448-8671 (JP)
(74) Representative: HOFFMANN - EITLE

(57) **Abstract**

A network device retrieving method and a network device retrieval apparatus capable of easily identifying a desired network device in a network having a large number of network devices are provided. After selection of criteria by the user only the relevant set of devices is shown on the screen of a management device.

## Description

### Background of the Invention

### Field of the Invention

The present invention relates to a network device retrieving method and a network device retrieval apparatus for retrieving a desired network device from a plurality of network devices connected to a network.

### Description of the Related Art

Recently, with the remarkable technological pregress of the Internet and WWW (Worldwide Web), industrial equipment such as a loom, etc. as disclosed by Japanese Patent Application Laid-open No.2003-5825 and Japanese Patent Application Laid-open No.2002-204281 is provided with a Web (WWW) server, a Web browser, etc. so that it can be connected as a network device to a network such as a LAN (local area network), etc. Now the recognition of a network simply as a computer is obsolete, and the number and types of network devices have amazingly increased.

Conventionally, there have been various network device retrieving methods for retrieving a desired network device from a large number of network devices connected to a network. For example, when a plurality of network devices are connected through serial communications on a LAN, etc., each network device is assigned a number (a MAC (media access control) address, an address in a TCP/IP (transmission control protocol/Internet protocol), an address added to serial communications data, etc.), with which the hardware and software of the network device can easily operate the network device, for identification of each network device. By a server, etc. centrally controlling the numbers for identification of a network device and by each network device controlling them, a desired network device can be retrieved from a number of network devices.

However, normally, assigning an identification number to each network device has the problem that a user cannot easily memorize the identification number which is normally represented as a sequence of numerals and symbols. Therefore, to allow a user to identify each network device, a name easily recognized by the user is assigned to each network device. Thus, in the network device retrieving method, hardware and software of a network device assigns a numeric data such as an identification number to each network device. On the other hand, a user assigns a significant name to each network device.

In the future there may be large factories established in which hundreds or thousands of network devices including Web servers and Web browsers are connected to a LAN.

### Description of the Related Art

However, in the above-mentioned large factories, there arises the following problem when a user refers to each piece of data for each network device.
1) A network device having a Web browser as a display device has the problem that it is necessary and inconvenient to input a URL (uniform resource locator) when other network devices and Web contents are specified. To solve the problem, a keyboard (as hardware or software) can be added to a network device. However, since the usage and use environment are different from those of general-purpose personal computers, etc., various inconveniences can occur. Additionally, an additional keyboard is costly.
2) To solve the problem described in 1) above, a hyperlink can be used to jump to a predetermined point by clicking (or touching a certain point on a touch panel) a certain point on the display device without inputting alphanumeric characters. However, since hyperlink is embedded in, for example, a WWW home page and a document, it is necessary to rewrite the home page or the document when a link is dynamically changed and the hyperlink is added and deleted. In the industrial field such as a fabric industry, etc. in which network devices are frequently powered on and off and machines are often replaced, it is inconvenient to frequently change the contents (home page and document) of a network device.
3) To solve the problem described in 2) above, there can be a server for presenting the contents having the hyperlink as a WWW home page so that all network devices can specify a target network device through a home page having the hyperlink presented by the server. When contents are changed, only the contents of the server are to be changed. It is also possible to dynamically obtain the name, the address, etc. of a network device using the technology of a DNS (domain name system) server, thereby automatically changing the contents.

However, when a network device accesses another network device, another server is required, and the server needs to be constantly operating. Therefore, special skill and cost are required to safely operate the server.

Thus, there is the above-mentioned problem with the conventional technology in a network device retrieving method using a large network having hundreds or thousands of network devices because it is hard for a user to memorize thousands of names although each name assigned to each network device is simple. Additionally, it is inefficient to search for a target network device using only its name. Furthermore, there is the problem that there are such a large number of network devices that a target network device can be mistakenly specified.

Therefore, with the above-mentioned problems taken into account, the present invention aims at providing a network device retrieving method and a network device retrieval apparatus capable of easily retrieving a desired network device in a network including a large number of network devices.

To solve the above-mentioned problems, the present invention uses the method described below.

That is, in the network device retrieving method according to the present invention, a computer retrieves a desired network device from a plurality of network devices connected to a network. In this method, identification information for identification of each of the plurality of network devices is associated with the status information about the status of each of the above-mentioned plurality of network devices and stored in a storage unit, and according to the input status information, the predetermined identification information is retrieved from the storage unit.

In the above-mentioned network device retrieving method, one or more pieces of status information can be displayed on a display unit, and, when a piece of status information is selected from the above-mentioned one or more pieces of status information displayed on the display unit, the predetermined identification information can be retrieved from the storage unit according to the selected status information, and the retrieved identification information can be displayed on the display unit.

Furthermore, in the network device retrieving method, when identification information is selected from the identification information displayed on the display unit, information about the network device according to the selected identification information can be displayed on the display unit.

In the network device retrieving method, when the identification information stored in the storage unit or the status information is to be changed, the identification information and the status information stored in the storage units of all network devices can be changed.

Furthermore, the status information in the network device retrieving method can be: type information about the type of the network device; position information about the position of the network device; operation information indicating whether or not the network device is being operated; type information about the type of the production produced by the network device; or efficiency information about the production efficiency of the network device.

The network device refers to, for example, a loom, a Web camera, etc. loaded with a Web server, a Web browser, and the status information refers to the position information about the loom and the Web camera, or the operation information indicating whether or not the loom and the Web camera are being operated.

Thus, since a network device is searched for according to the status information, a desired network device can be easily retrieved eventhough there are a number of network devices connected to a network. Thus, the load on the user can be more easily reduced than in the retrieval for a network device in the conventional network device retrieving method in which a network device is searched for based on the name and the IP address of a network device, and the information about a target network device can be efficiently obtained.

The scope of the present invention ranges up to a network device retrieval apparatus for retrieving a desired network device from a plurality of network devices connected to a network.

### Brief Description of the Drawings

FIG. 1 shows the configuration of a network for explanation of the network device retrieving method according to an embodiment of the present invention;
FIG. 2 shows an example of the configuration of a network device;
FIG. 3 is a flowchart for explanation of the operation of a network device;
FIG. 4 shows an example of the screen displayed on an output device of a network device; and
FIG. 5 shows an example of a data table stored in a network device.

### Description of the Preferred Embodiments

The embodiments of the present invention are explained below by referring to the attached drawings.

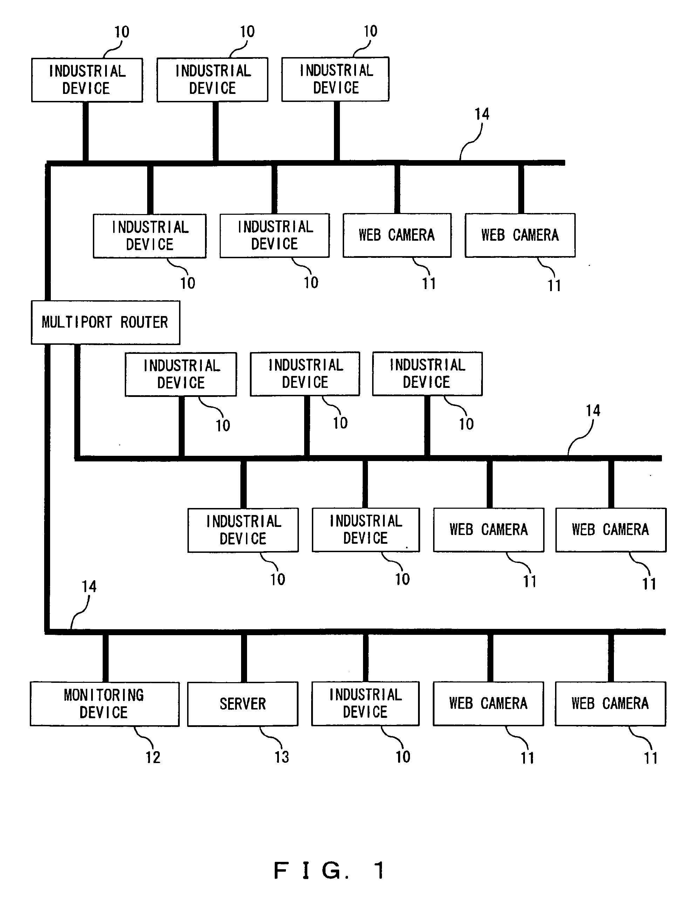

FIG. 1 shows the configuration of a network for explanation of the network device retrieving method according to an embodiment of the present invention.

As shown in FIG. 1, network devices such as an industrial device 10 for control of an operation of an industrial machine such as a loom, etc., a Web camera 11 for distributing a picture of the camera, a monitoring device 12 for monitoring the statue of an industrial device 10, a server 13 for centrally managing predetermined data of the industrial device 10 and the Web camera 11, etc. are connected to a network 14 such as a LAN, etc.

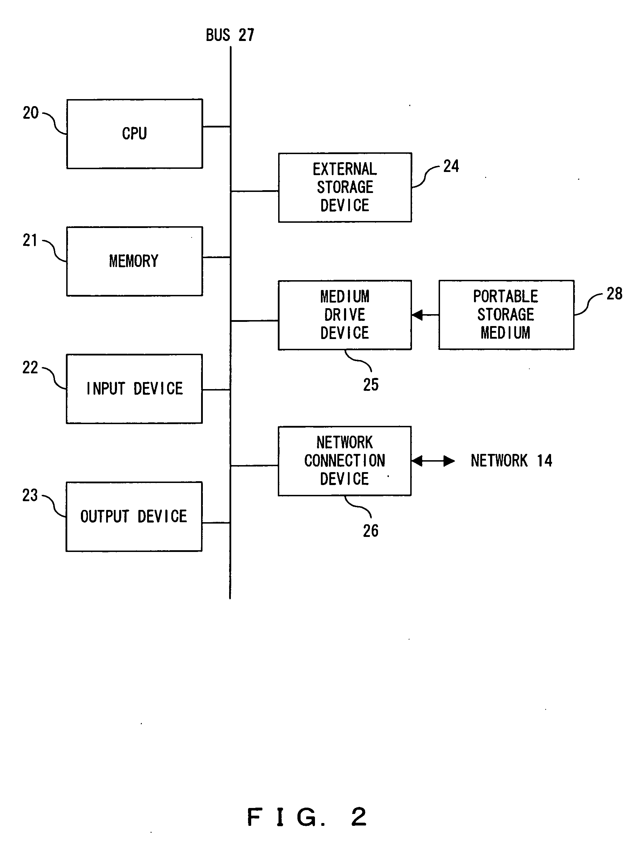

FIG. 2 shows an example of the configuration of a network device.

As shown in FIG. 2, a network device comprises a CPU (central processing unit) 20 (a retrieval unit), memory 21 (a storage unit), an input device 22, an output device 23 (a display unit), an external storage device 24 (a storage unit), a medium drive device 25, and a network connection device 26, and they are interconnected through a bus 27.

The memory 21 includes, for example, ROM (read only memory), RAM (random access memory), flash memory, SRAM (static random access memory), DRAM (dynamic random access memory), etc., and stores a program for use in processing, a data table described later, etc. The CPU 20 processes a necessary process by executing a program using the memory 21.

A Web server facility, a Web browser facility, etc. correspond to software components described in a program, and respectively stored in specific program code segments in the memory 21.

The input device 22 is used by a user inputting an instruction and information through a keyboard, a mouse, a pickup device, etc.

The output device 23 includes, for example, a display, a speaker, etc., and is used in outputting to a user an inquiry, information on a Web page, etc. A combination of the input device 22 and the output device 23 can configure a touch panel, etc. as a Web browser of the industrial device 10.

The external storage device 24 includes, for example, a magnetic disk device, an optical disk device, a magneto-optical disk, etc. A user stores in the external storage device 24 a data table, etc. described later for retrieval of a network device, and uses it as necessary after loading it into the memory 21.

The medium drive device 25 drives a portable storage medium 28 (a storage unit), and accesses the contents stored therein. The portable storage medium 28 can be any computer-readable storage medium such as a memory card, a flexible disk, CD-ROM (compact disk read-only memory), an optical disk, a magneto-optical disk, etc. A user stores in the portable storage medium 28 a data table, etc. described later for retrieval of a network device, and uses it as necessary after loading it into the memory 21.

The network connection device 26 is controlled by a network interface, and is connected to any network 14 such as a LAN, etc. for conversion of data for use in communications. A network device receives as necessary from an external device a data table, etc. described later for retrieval of a network device through the network connection device 26, and can use it after loading it into the memory 21.

A program and data stored in the portable storage medium 28 and an external data table are loaded into the memory 21. The CPU 20 used the data, executes the program using the data, and performs necessary processing.

Since an example of a screen, etc. displayed on the output device 23 described later can be realized using an existing program and a software technology, the contents of the displaying process are not specifically explained here.

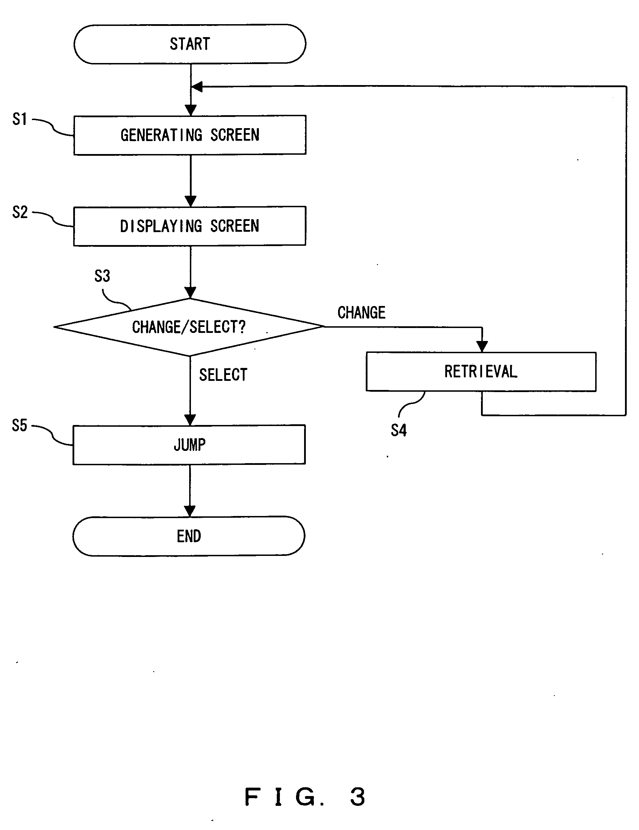

FIG. 3 is a flowchart for explanation of an operation of a network device. The network device is assumed to be the industrial device 10.

In step S1, the network device generates a screen for use by a user selecting a desired network device.

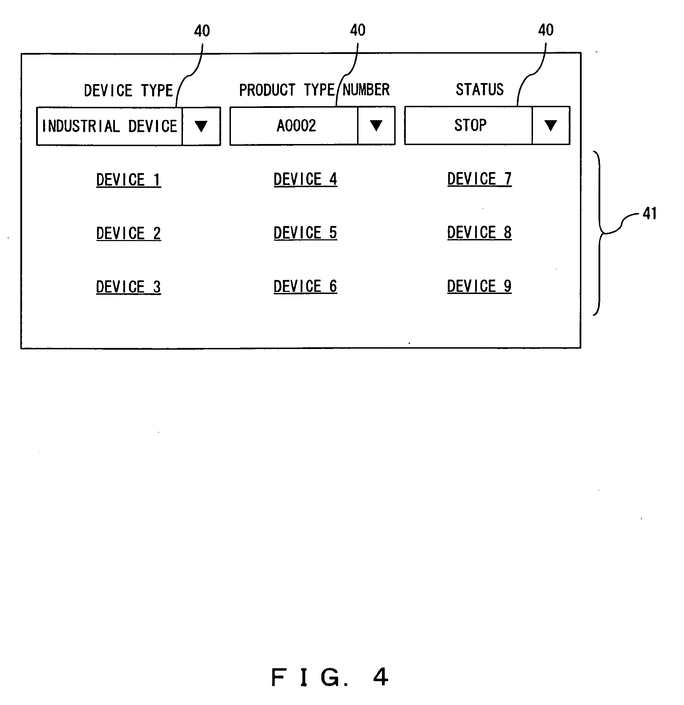

FIG. 4 shows an example of a screen for use by a user selecting a desired network device.

As shown in FIG. 4, a keyword column 40 for retrieval of a desired network device from a number of network devices is provided at the upper portion (shown in FIG. 4) of the screen. By either inputting a predetermined keyword in the keyword column 40 or selecting a predetermined keyword from a predetermined keyword group, a link 41 based on the input or selected keyword is displayed at the lower portion (shown in FIG. 4) of the screen. When the user selects the desired link 41 from the displayed link 41, the screen shown in FIG. 4 jumps to the screen based on the Web contents of the selected link 41.

For example, in the example shown in FIG. 4, a keyword can be changed on each of the "device type", "product type number", and "status", the keyword "industrial device" is input or selected for the keyword column 40 of the "product type number", the keyword "A0002" is input or selected for the keyword column 40 of the "product type number", and the keyword "STOP" is input or selected for the keyword column 40 of the "status". The network device extracts nine predetermined network devices ("device 1" through "device 9") from a number of network devices based on the "industrial device", "A0002", and "STOP", and displays them on the screen.

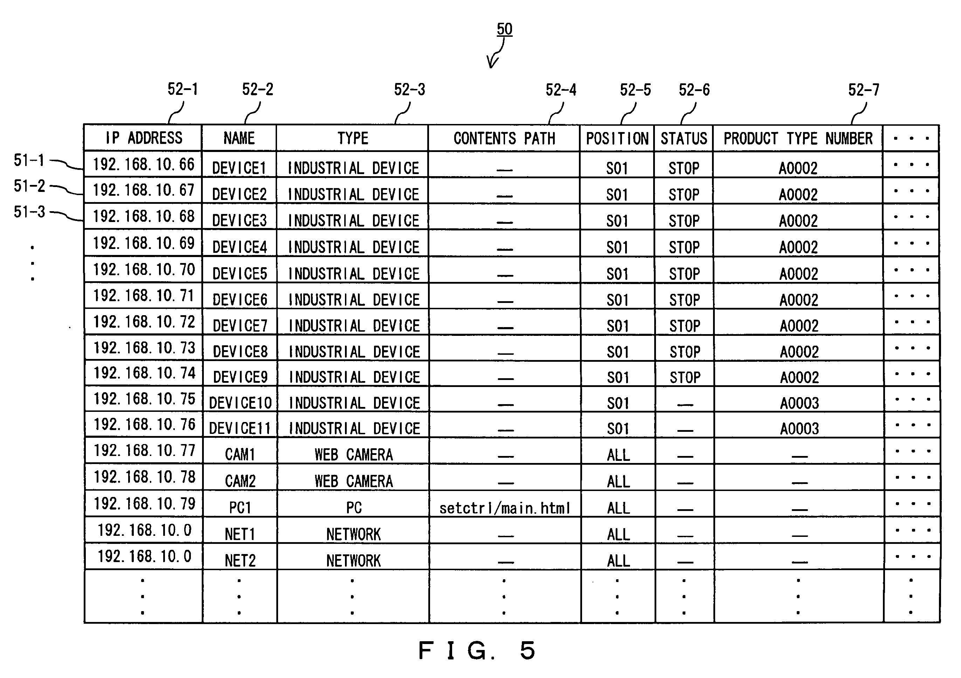

FIG. 5 shows an example of a data table required to generate the screen shown in FIG. 4 (hereinafter referred to as an IP table).

An IP table 50 shown in FIG. 5 contains data stored in the memory 21, the external storage device 24, the portable storage medium 28, etc. of a network device, and stores a number of identification information records 51 (51-1, 51-2, 51-3, ...) for each network device. Each identification information record 51 comprises an IP address area 52-1, a name area 52-2, a type area 52-3, a contents path area 52-4, a position area 52-5, an operation status area 52-6, and a product type number area 52-7 respectively storing an IP address (identification information), the name of a network device (identification information), the type of a network device (type information, status information), a contents path, the position of a network device (coordinates corresponding to a site area of a factory, etc.) (position information, status information), the information about the current operation status of a network device (operation type information, status information), and the product type number of the product currently produced by the network equipment (product type information, status information), which are input by the input device 22, the portable storage medium 28, etc. of a network device. In the example shown in FIG. 5, the IP address area 52-1 of the leading identification information record 51-1 stores "192.168.10.66", the name area 52-2 stores "device 1", the type area 52-3 stores the "industrial device", the contents path area 52-4 stores "-", the position area 52-5 stores "S01", the operation status area 52-6 stores "STOP", the product type number area 52-7 stores "A0002". When a network device is fiber equipment for weaving fabrics, the information indicating the current operation status of the network device can contain error information about, for example, cut yarn, a mistaken setting of yarn, etc. occurring when the fabric is woven.

To display a screen as shown in FIG. 4 on each network device, each network device is required to have a common IP table 50. To attain this, it is necessary to exchange data of the IP table 50 between network devices. Data can be exchanged by exchanging all or a part of data of the IP table 50 using the network 14 as a medium. For example, when a "name" or a "product type number" is changed in a network device, or when the "status" of an operation, a stop, etc. is changed in a network device, the data after the change of the IP address, the name, ..., etc. of the network device is transmitted to all network devices in the TCP/IP protocol communications, etc. Then, all network devices which have received the communications change the IP table 50 so that the latest screen can be displayed when the user requests the screen to be displayed.

Thus, based on the constantly updated data of the IP table 50, the screen which is optimum for the purpose of the user (for example, to copy the setting of the operation of a network device for producing the same product type for exchange of a product type, to search for a network device of low efficiency and refer to the history information about the network device) can be presented to the user.

Then, in step S2 shown in FIG. 3, a network device displays a generated screen on the output device 23.

Then, in step S3, a network device determines whether a user has changed the keyword of the keyword column 40 or the user has selected the link 41.

When it is determined that the user has changed the keyword (change in step S3), the network device retrieves the IP table 50 based on the changed keyword, and extracts a predetermined identification information record 51 in step S4. Then, control is returned to step S1, and a screen is generated based on the changed keyword.

On the other hand, if it is determined that the link 41 has been selected (select in step S3), then the network device jumps to the selected link 41 in step S5.

Thus, for example, when the "industrial device", "STOP", and "A0002" have been input or selected as a keyword on the screen shown in FIG. 4, the network device extracts the identification information records 51-1 through 51-9 satisfying the condition of all keywords, and displays the link 41 of predetermined "device 1" through "device 9" according to the identification information records 51-1 through 51-9. Then, for example, if the "device 1" has been specified by the user, the network device jumps the screen based on the IP address of the IP address area 52-1 and the contents path of the contents path area 52-4 of the identification information record 51-1. The keyword column 40 for the retrieval indicates the "device type", the "product type number", and the "status" in the display shown in FIG. 4. However, in the area in the IP table 50, the area can be displayed on the screen by arbitrarily combining the areas according to each use. Additionally, one or more keyword columns 40 can be displayed.

As described above, the feature of the network device retrieving method is to display the screen as shown in FIG. 4 on a Web browser of a network device, a user is made to specify the status information (for example, operation status information, production type information, etc.) about a network device, and a desired network device is retrieved.

Thus, a user can easily select a target network device (for example, a network device being stopped, etc.) without inputting a URL into a Web browser. As a result, for example, a user is free of heavy load and can select a target network device in a large factory containing thousands of network devices.

### <Other Embodiments>

The present invention is not limited to the above-mentioned embodiments, but can realize various configurations within the scope described in each of the claims. For example, the following configuration variation can be realized.
(1) The above-mentioned IP table 50 includes the IP address area 52-1, the name area 52-2, the type area 52-3, the contents path area 52-4, the position area 52-5, the operation status area 52-6, and the product type number area 52-7. In addition to these areas, various areas such as an efficiency area in which the current production efficiency (efficiency information, status information) of a network device is to be stored, a rotation number area in which the number of rotations of a motor, etc. of a network device is to be stored, etc. can be included.
(2) Although the IP table 50 according to the above-mentioned embodiment includes a plurality of areas, it can be formed by one or more areas.
(3) When the IP table 50 contains the position area 52-5, a factory layout can be generated and displayed on the screen based on the position data of the position area 52-5, and the network device provided in the factory layout can be, for example, pressed by a finger so that the information about the target network device can be referred to. Thus, by generating a graphical screen, the user can easily select a desired network device.
(4) Furthermore, in addition to the method of updating the data through the network 14, the data of the IP table 50 can be updated by the portable storage medium 28 such as a memory card, etc., by manually inputting data by preparing a changing interface of the IP table 50 for each network device, and by combining the above-mentioned methods.
(5) Additionally, a computer for exchanging data of the IP table 50 can be provided in the network 14 so that a part or all of the changed IP table 50 can be transmitted to all network devices. Thus, the IP table 50 can be updated without charging a load in the CPU 20 of a network device.

As described above, according to the present invention, a network device can be retrieved according to the status information about a network device (for example, operation status information, production type information, etc.). Therefore, although there are a number of network devices connected to the network 14, the user can easily select a desired network device. Thus, the load on the user can be more easily reduced than in the retrieval for a network device in the conventional network device retrieving method in which a desired network device is searched for based on the name and the IP address of a device, and the information about a target network device can be efficiently obtained.

## Claims

1. A network device retrieving method of a computer retrieving a desired network device from a plurality of network devices (10) connected to a network (14), comprising:
associating identification information for identification of each of the plurality of network devices (10) with status information about status of each of the plurality of network devices (10) and storing the information for each of the plurality of network devices (10) in a storage unit (21); and
according to the input status information, the predetermined identification information is retrieved from the storage unit (21).

2. The method according to claim 1, wherein:
one or more pieces of status information is displayed on a display unit (23);
when a piece of status information is selected from the one or more pieces of status information displayed on the display unit (23), the predetermined identification information is retrieved from the storage unit (21) according to the selected status information; and
the retrieved identification information is displayed on the display unit (23).

3. The method according to claim 2, wherein:
when identification information is selected from the identification information displayed on the display unit (23), information about the network device (10) according to the selected identification information is displayed on the display unit (23).

4. The method according to any of claims 1 through 3, wherein:
when the identification information or the status information stored in the storage unit (21) is to be changed, the identification information and the status information stored in the storage units (21) of all network devices (10) are changed.

5. The method according to any of claims 1 through 4, wherein
the status information can be: type information about a type of the network device (10); position information about a position of the network device (10); operation information indicating whether or not the network device (10) is being operated; type information about a type of a production produced by the network device (10); or efficiency information about production efficiency of the network device (10).

6. A network device retrieval apparatus for retrieving a desired network (10) device from a plurality of network devices (10) connected to a network (14), comprising:
a storage unit (21) associating identification information for identification of each of the plurality of network devices (10) with status information about status of each of the plurality of network devices (10) and storing the information for each of the plurality of network devices (10); and
a retrieval unit (20) retrieving predetermined identification information from the storage unit (21) according to the input status information.
